# EUROPEAN PATENT APPLICATION

(11) **EP 4 615 048 A1**
(43) Date of publication of application: **10.09.2025**
(21) Application number: 23890666.3
(22) Date of filing: 08.11.2023
(51) Int. Cl.: H04W 28/02

(54) **COMMUNICATION METHOD AND COMMUNICATION APPARATUS**

(30) Priority: 14.11.2022 CN 202211422053
(71) Applicant: Huawei Technologies Co., Ltd., Shenzhen, Guangdong 518129 (CN)
(72) Inventor: FAN, Qiang, Shenzhen, Guangdong 518129 (CN); REN, Shaofeng, Shenzhen, Guangdong 518129 (CN); ZHU, Yuanping, Shenzhen, Guangdong 518129 (CN); YANG, Xudong, Shenzhen, Guangdong 518129 (CN)
(74) Representative: Pfenning, Meinig & Partner mbB
(86) International application number: PCT/CN2023/130421
(87) International publication number: WO 2024/104230

(57) **Abstract**

This application provides a communication method and a communication apparatus, and is applied to the field of data transmission between a first communication apparatus and an access network device. The method includes: A first communication apparatus receives configuration information from an access network device, where the configuration information is used by the first communication apparatus to report first information, the first information is used to determine a network congestion degree between the first communication apparatus and the access network device, and the first information is associated with buffer status information of the first communication apparatus; and the first communication apparatus reports the first information to the access network device. **In** this way, the access network device can more accurately determine the network congestion degree between the first communication apparatus and the access network device.

## Description

This application claims priority to Chinese Patent Application No. 202211422053.3, filed with the China National Intellectual Property Administration on November 14, 2022 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In the communication field, network congestion easily causes great impact on data transmission between a terminal device and a network device. For example, after the network congestion occurs, the network device cannot transmit a data flow of a low-latency service of the terminal device in real time. This affects a running status of the low-latency service of the terminal device.

Currently, the industry proposes a technical solution in which the network device perceives the network congestion. Specifically, after perceiving the network congestion, the network device indicates, to a core network device, that the network congestion occurs. Then, the core network device indicates the terminal device to reduce a data transmission rate, to alleviate the network congestion between the network device and the terminal device. The network device perceives the network congestion based on average transmission latency measurement of uplink data of the terminal device. In this manner, accuracy of perceiving the network congestion by the network device is low, and it is difficult to effectively avoid the network congestion.

Therefore, how to improve the accuracy of perceiving the network congestion by the network device is an urgent technical problem to be resolved.

### SUMMARY

This application provides a communication method and a communication apparatus, to improve accuracy of perceiving network congestion by a network device.

According to a first aspect, a communication method is provided. The method includes: A first communication apparatus receives configuration information from an access network device, where the configuration information is used by the first communication apparatus to report first information, the first information is used to determine a network congestion degree between the first communication apparatus and the access network device, and the first information is associated with buffer status information of the first communication apparatus. The first communication apparatus reports the first information to the access network device.

It should be understood that, that the first information is used by the first communication apparatus to report first information includes: After receiving the configuration information, the first communication apparatus may determine that the first information needs to be reported to the access network device. Alternatively, that the first information is used by the first communication apparatus to report first information may include: The configuration information can indicate the first communication apparatus to report the first information to the access network device.

In a possible implementation, the configuration information includes a related configuration used by the first communication apparatus to report the first information to the access network device. The first communication apparatus reports the first information to the access network device based on the related configuration included in the configuration information.

In conclusion, the configuration information can be used by the first communication apparatus to report the first information to the access network device. That the first communication apparatus reports the first information to the access network device may not be performed based on an indication function of the configuration information.

Optionally, that the first communication apparatus reports the first information to the access network device may alternatively be performed based on an indication function of the configuration information. This is not specifically limited in this application.

Specifically, it is difficult for the access network device to obtain or perceive the buffer status information of the first communication apparatus. Therefore, the access network device indicates the first communication apparatus to report, to the access network device, the first information associated with the buffer status information of the first communication apparatus. The access network device more accurately determines, based on the first information reported by the first communication apparatus, the network congestion degree between the first communication apparatus and the access network device. In this way, network congestion can be effectively avoided.

Specifically, when the access network device indicates a higher network congestion perceiving degree to a core network device, the core network device indicates, based on the higher network congestion perceiving degree, to adjust a data transmission rate of the first communication apparatus (for example, if the network congestion degree is severe, the core network device may indicate the first communication apparatus to reduce the data transmission rate to a very low level; or if the network congestion degree is moderate, the core network device may indicate the first communication apparatus to reduce the data transmission rate to a moderate level). Therefore, the network congestion degree between the first communication apparatus and the access network device can be effectively alleviated.

It should be understood that accuracy of adjusting the data transmission rate of the first communication apparatus by the core network device is associated with accuracy of perceiving the network congestion degree by the access network device. When the accuracy of perceiving the network congestion degree by the access network device is high, the core network device can more accurately adjust the data transmission rate of the first communication apparatus.

In a possible implementation, that the first communication apparatus reports the first information to the access network device includes: The first communication apparatus reports the first information to a subscriber unit of the access network device. Alternatively, the first communication apparatus reports the first information to a distributed unit of the access network device. Alternatively, the first communication apparatus reports the first information to a control unit of the access network device.

In this way, in this application, the access network device is supported in obtaining, in a plurality of ways, the first information reported by the first communication apparatus.

In a possible implementation, the first information includes at least one of the following: the buffer status information, a data transmission latency, or an indication parameter. The data transmission latency is associated with the buffer status information. The indication parameter indicates the network congestion degree. The indication parameter is associated with at least one of the buffer status information and the data transmission latency.

Specifically, in this application, the access network device is supported in more accurately determining, after obtaining the buffer status information, the data transmission latency, or the indication parameter reported by the first communication apparatus, the network congestion degree between the first communication apparatus and the access network device based on one or more of the information. In this way, the network congestion degree between the first communication apparatus and the access network device can be effectively alleviated.

In a possible implementation, that the indication parameter is associated with at least one of the buffer status information and the data transmission latency includes: The indication parameter is determined by the first communication apparatus based on the buffer status information. Alternatively, the indication parameter is determined by the first communication apparatus based on the data transmission latency. Alternatively, the indication parameter is determined by the first communication apparatus based on the buffer status information and the data transmission latency.

By using the indication parameter, in this application, the access network device is supported in directly determining the network congestion degree between the first communication apparatus and the access network device. This can reduce processing time of the access network device, and can also reduce time for the core network device to indicate the first communication apparatus to reduce the data transmission rate.

In a possible implementation, the indication parameter includes at least one of the following: proportion information or level information. The proportion information indicates the network congestion degree, and the level information indicates the network congestion degree.

Specifically, the proportion information or the level information can indicate, to the access network device, the network congestion degree between the first communication apparatus and the access network device. For example, 90% in the proportion information indicates that the network congestion degree between the first communication apparatus and the access network device is very high, and 50% in the proportion information indicates that the network congestion degree between the first communication apparatus and the access network device is very low.

In this way, the access network device can directly determine the network congestion degree between the first communication apparatus and the access network device based on the proportion information or the level information. This can further reduce the processing time of the access network device.

In a possible implementation, the first information is associated with at least one data radio bearer (data radio bearer, DRB) or at least one quality of service (quality of service, QoS) flow.

According to a second aspect, a communication method is provided, and includes: An access network device sends configuration information to a first communication apparatus, where the configuration information is used by the first communication apparatus to report first information, the first information is used to determine a network congestion degree between the first communication apparatus and the access network device, and the first information is associated with buffer status information of the first communication apparatus. A subscriber unit of the access network device receives the first information from the first communication apparatus.

In a possible implementation, that a subscriber unit of the access network device receives the first information from the first communication apparatus includes: A distributed unit of the access network device receives the first information from the first communication apparatus. The distributed unit sends the first information to the subscriber unit.

In a possible implementation, that a subscriber unit of the access network device receives the first information from the first communication apparatus includes: A control unit of the access network device receives the first information from the first communication apparatus. The control unit sends the first information to the subscriber unit.

In a possible implementation, that a subscriber unit of the access network device receives the first information from the first communication apparatus includes: A distributed unit of the access network device receives the first information from the first communication apparatus. The distributed unit sends the first information to a control unit of the access network device. The control unit sends the first information to the subscriber unit.

In a possible implementation, the first information includes at least one of the following: the buffer status information, a data transmission latency, or an indication parameter. The data transmission latency is associated with the buffer status information. The indication parameter indicates the network congestion degree. The indication parameter is associated with at least one of the buffer status information and the data transmission latency.

In a possible implementation, that the indication parameter is associated with at least one of the buffer status information and the data transmission latency includes: The indication parameter is determined by the first communication apparatus based on the buffer status information. Alternatively, the indication parameter is determined by the first communication apparatus based on the data transmission latency. Alternatively, the indication parameter is determined by the first communication apparatus based on the buffer status information and the data transmission latency.

In a possible implementation, the indication parameter includes at least one of the following: proportion information or level information. The proportion information indicates the network congestion degree, and the level information indicates the network congestion degree.

In a possible implementation, the first information is associated with at least one data radio bearer or at least one quality of service flow.

According to a third aspect, a communication apparatus is provided, and includes a transceiver unit, configured to receive configuration information from an access network device, where the configuration information is used by the communication apparatus to report first information, the first information is used to determine a network congestion degree between the communication apparatus and the access network device, and the first information is associated with buffer status information of the communication apparatus. The transceiver unit is further configured to report the first information to the access network device.

In a possible implementation, the transceiver unit is further configured to: report the first information to a subscriber unit of the access network device; or report the first information to a distributed unit of the access network device; or report the first information to a control unit of the access network device.

In a possible implementation, the first information includes at least one of the following: the buffer status information, a data transmission latency, or an indication parameter. The data transmission latency is associated with the buffer status information. The indication parameter indicates the network congestion degree. The indication parameter is associated with at least one of the buffer status information and the data transmission latency.

In a possible implementation, that the indication parameter is associated with at least one of the buffer status information and the data transmission latency includes: The indication parameter is determined by the communication apparatus based on the buffer status information. Alternatively, the indication parameter is determined by the communication apparatus based on the data transmission latency. Alternatively, the indication parameter is determined by the communication apparatus based on the buffer status information and the data transmission latency.

In a possible implementation, the indication parameter includes at least one of the following: proportion information or level information. The proportion information indicates the network congestion degree, and the level information indicates the network congestion degree.

In a possible implementation, the first information is associated with at least one DRB or at least one QoS flow.

According to a fourth aspect, an access network device is provided, and includes: a control unit, configured to send configuration information to a first communication apparatus, where the configuration information is used by the first communication apparatus to report first information, the first information is used to determine a network congestion degree between the first communication apparatus and the access network device, and the first information is associated with buffer status information of the first communication apparatus; and a subscriber unit, configured to receive the first information from the first communication apparatus.

In a possible implementation, the access network device further includes a distributed unit. The distributed unit is configured to receive the first information from the first communication apparatus. The distributed unit is further configured to send the first information to the subscriber unit.

In a possible implementation, the control unit is further configured to receive the first information from the first communication apparatus. The control unit is further configured to send the first information to the subscriber unit.

In a possible implementation, the access network device further includes a distributed unit. The distributed unit is configured to receive the first information from the first communication apparatus. The distributed unit is further configured to send the first information to the control unit. The control unit is configured to receive the first information from the distributed unit. The control unit is further configured to send the first information to the subscriber unit.

In a possible implementation, the first information includes at least one of the following: the buffer status information, a data transmission latency, or an indication parameter. The data transmission latency is associated with the buffer status information. The indication parameter indicates the network congestion degree. The indication parameter is associated with at least one of the buffer status information and the data transmission latency.

In a possible implementation, that the indication parameter is associated with at least one of the buffer status information and the data transmission latency includes: The indication parameter is determined by the first communication apparatus based on the buffer status information. Alternatively, the indication parameter is determined by the first communication apparatus based on the data transmission latency. Alternatively, the indication parameter is determined by the first communication apparatus based on the buffer status information and the data transmission latency.

In a possible implementation, the indication parameter includes at least one of the following: proportion information or level information. The proportion information indicates the network congestion degree, and the level information indicates the network congestion degree.

In a possible implementation, the first information is associated with at least one DRB or at least one QoS flow.

According to a fifth aspect, a communication apparatus is provided, and includes a processor. The processor is configured to enable, by executing a computer program or instructions or by using a logic circuit, the communication apparatus to perform the method according to any one of the first aspect and the possible implementations of the first aspect, or the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface. The communication interface is configured to input and/or output a signal.

According to a sixth aspect, a communication apparatus is provided, and includes a logic circuit and an input/output interface. The input/output interface is configured to input and/or output a signal. The logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided. The computer-readable storage medium stores a computer program or instructions, and when the computer program or the instructions are run on a computer, the method according to any one of the first aspect and the possible implementations of the first aspect is performed, or the method according to any one of the first aspect and the possible implementations of the first aspect is performed.

According to an eighth aspect, a computer program product is provided, and includes instructions. When the instructions are run on a computer, the method according to any one of the first aspect and the possible implementations of the first aspect is performed, or the method according to any one of the first aspect and the possible implementations of the first aspect is performed.

According to a ninth aspect, a chip is provided, and includes a logic circuit. The logic circuit is configured to perform the method according to any one of the first aspect and the possible implementations of the first aspect, or the logic circuit is configured to perform the method according to any one of the second aspect and the possible implementations of the second aspect.

According to a tenth aspect, a communication system is provided, and includes a first communication apparatus and an access network device. The first communication apparatus is configured to perform the method according to any one of the first aspect and the possible implementations of the first aspect. The access network device is configured to perform the method according to any one of the second aspect and the possible implementations of the second aspect.

For descriptions of beneficial effects of the second aspect to the tenth aspect, refer to descriptions of beneficial effects of the first aspect. Details are not described herein again.

### BRIEF DESCRIPTION OF DRAWINGS

FIG. 1 is a diagram of a communication system 100 to which an embodiment of this application is applicable;
FIG. 2 is a diagram of an average uplink transmission latency;
FIG. 3 is a schematic interaction flowchart of a communication method 300 according to an embodiment of this application;
FIG. 4 is a schematic interaction flowchart of a communication method 400 according to an embodiment of this application;
FIG. 5 is a schematic interaction flowchart of a communication method 500 according to an embodiment of this application;
FIG. 6 is a schematic interaction flowchart of a communication method 600 according to an embodiment of this application;
FIG. 7 is a schematic interaction flowchart of a communication method 700 according to an embodiment of this application;
FIG. 8 is a diagram of a structure of a communication apparatus 800 according to an embodiment of this application;
FIG. 9 is a diagram of a structure of a communication apparatus 900 according to an embodiment of this application;
FIG. 10 is a diagram of a structure of a communication apparatus 1000 according to an embodiment of this application;
FIG. 11 is a diagram of a structure of a communication apparatus 1100 according to an embodiment of this application; and
FIG. 12 is a diagram of a structure of a communication apparatus 1200 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G like a 6th generation (6th generation, 6G) system, and non-terrestrial network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application may also be applied to a scenario in which the terminal is connected to a single base station. A base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application are also applicable to a macro-micro scenario including different forms of base stations in a communication network. For example, the base station may be a satellite, an air balloon station, an uncrewed aerial vehicle station, or the like. The technical solutions in embodiments of this application are also applicable to a scenario in which both a wide-coverage base station and a small-coverage base station exist.

The technical solutions in embodiments of this application may be applied to scenarios in which there is a high-reliability service requirement, for example, scenarios such as a port, industrial manufacturing, transportation, and coal mining.

It may be further understood that the technical solutions in embodiments of this application may be further applied to 5.5G, 6G, and later wireless communication systems. Application scenarios include but are not limited to scenarios such as ground cellular communication, NTN, satellite communication, high altitude communication platform (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in a manner of matching the terminal device. In embodiments of this application, the chip system may include a chip, or may include a chip and another discrete component.

The network device in embodiments of this application is a device having a wireless transceiver function, and is configured to communicate with the terminal device. The access network device may be a node in a radio access network (radio access network, RAN), may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include base stations in various forms, for example, a macro base station, a micro base station (also referred to as a small cell), a relay station, a transmission reception point (transmission reception point, TRP), a transmitting point (transmitting point, TP), a mobile switching center, a device that functions as a base station in device-to-device (device-to-device, D2D), vehicle-to-everything (vehicle-to-everything, V2X), and machine-to-machine (machine, M2M) communication, and a network device in the NTN communication system. This is not specifically limited in embodiments of this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device that has a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used in a manner of matching the network device. In embodiments of this application, the chip system may include a chip, or may include a chip and another discrete component.

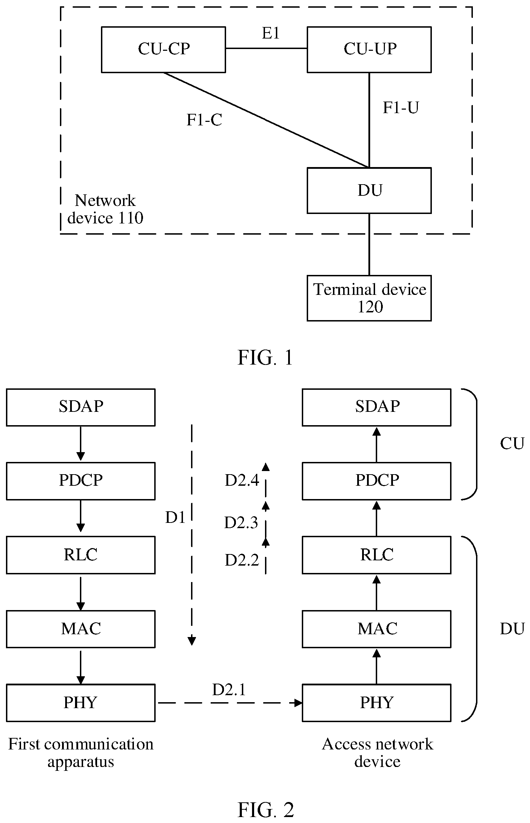

FIG. 1 is a diagram of a communication system 100 to which an embodiment of this application is applicable. As shown in FIG. 1, the communication system 100 includes a network device 110 and a terminal device 120. A quantity of terminal devices 120 and a quantity of network devices 110 included in the communication system 100 are not limited in this application. It should be understood that FIG. 1 is merely an example for understanding, and cannot limit the protection scope claimed in this application. The terminal device 120 may be any terminal device listed above, and the network device 110 may also be any network device listed above.

Specifically, the network device 110 may use a CU-DU architecture, or may not use a CU-DU architecture. This is not limited in this application. The network device 110 may alternatively use a CP-UP architecture, or may not use a CP-UP architecture. This is not limited in this application either. For ease of description, in this application, an example in which the network device 110 uses the CU-DU architecture and the CU uses the CP-UP architecture is used for description.

The network device 110 can perceive a network congestion degree. Specifically, the network device 110 perceives network congestion by measuring an average transmission latency of uplink data of the terminal device 120. For details, refer to FIG. 2.

FIG. 2 is a diagram of an average uplink transmission latency. As shown in FIG. 2, the average uplink transmission latency includes:
➢ D1: average latency of a packet data convergence protocol (packet data convergence protocol, PDCP) data packet, where the average latency of the PDCP data packet is a queuing latency of the PDCP data packet, and the queuing latency of the PDCP data packet includes a latency of an uplink data packet from a service data adaptation protocol (service data adaptation protocol, SDAP) layer to a PDCP layer until an uplink (uplink, UL) grant (grant) for transmitting the uplink data packet is available (a latency of the data packet from the SDAP layer to a medium access control (medium access control, MAC) layer);
➢ D2.1: average air interface latency, where the average air interface latency is a latency from time when the uplink data packet starts to be scheduled to time when the uplink data packet is successfully received and delivered to a radio link control (radio link control, RLC) layer (a latency of the data packet from a physical (physical, PHY) layer of a first communication apparatus to PHY layer of an access network device);
➢ D2.2: average RLC latency, where the average RLC latency is a latency from time when a first part of an RLC service data unit (service data unit, SDU) is successfully received to time when the RLC SDU is delivered to the PDCP layer (a latency of the data packet at the RLC layer);
➢ D2.3: average uplink F1-U latency, where the average F1-U latency is an average transmission latency over an F1 interface between a DU and a CU (a latency of the data packet from the RLC layer to the PDCP layer); and
➢ D2.4: average PDCP reordering latency, where the average PDCP reordering latency is a latency from time when a network device 110 receives a PDCP protocol data unit (protocol data unit, PDU) to time when the network device 110 delivers a PDCP SDU to an upper layer (the SDAP layer) (a latency of the data packet at the PDCP layer).

Specifically, a terminal device 120 can determine the D1, and report the D1 to the network device 110 by using radio resource control (radio resource control, RRC) information. After receiving the D1 reported by the terminal device 120, a CU-CP reports the D1 to a CU-UP through an E1 interface between the CP and the UP. The DU can determine the D2.1 and the D2.2, and report the D2.1 and the D2.2 to the CU-UP through an F1-C interface and the E1 interface or an F1-U interface (in other words, transmission paths of the D2.1 and the D2.2 include two paths: DU-CU-CP-CU-UP and DU-CU-UP). The CU-UP can determine the D2.3 and the D2.4. Then, the CU-UP calculates the average uplink transmission latency based on the foregoing five latencies, and determines, based on the average uplink transmission latency, whether network congestion occurs (a larger average uplink transmission latency indicates that the CU-UP may determine that the network congestion occurs). Alternatively, the CU-UP may send the average uplink transmission latency to a core network device, and the core network device determines, based on the average uplink transmission latency reported by the CU-UP, whether network congestion occurs.

However, the network device 110 cannot accurately perceive a network congestion degree in a manner of measuring the average uplink transmission latency. In other words, the network congestion degree perceived by the network device 110 in the manner of measuring the average uplink transmission latency is not necessarily true. For example, a current average transmission latency of the uplink data packet is large, but the terminal device 120 has no uplink data to transmit. It may not be accurate for the network device 110 to consider, based on the large average transmission latency, that the network congestion occurs. As a result, in the manner of measuring the average uplink transmission latency, accuracy of perceiving network congestion by the network device is low. Consequently, it is difficult to effectively avoid the network congestion.

In view of the foregoing technical problem, this application provides a communication method and a communication apparatus, to effectively improve the accuracy of perceiving the network congestion by the network device.

The following describes the communication method in embodiments of this application with reference to the accompanying drawings.

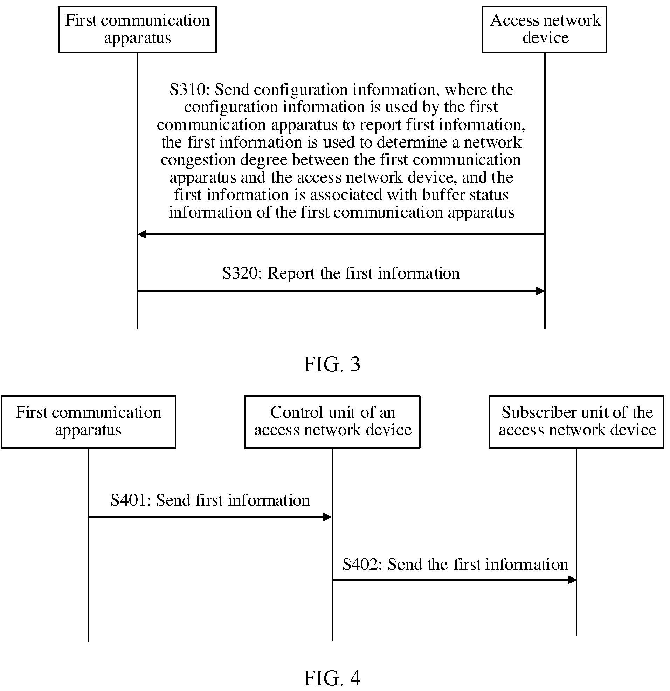

FIG. 3 is a schematic interaction flowchart of a communication method 300 according to an embodiment of this application. The method 300 may be performed by a first communication apparatus and an access network device, or may be performed by a module and/or a component (for example, a chip or an integrated circuit) that are/is installed in the first communication apparatus and the access network device and that have/has a corresponding function. This is not limited in this embodiment of this application. The following uses the first communication apparatus and the access network device as an example for description. As shown in FIG. 3, the method 300 includes the following steps.

S310: The access network device sends configuration information to the first communication apparatus, where the configuration information is used by the first communication apparatus to report first information, the first information is used to determine a network congestion degree between the first communication apparatus and the access network device, and the first information is associated with buffer status information of the first communication apparatus.

Correspondingly, the first communication apparatus receives the configuration information from the access network device, and sends the first information to the access network device based on the configuration information.

It should be understood that, that the configuration information is used by the first communication apparatus to report first information includes: After receiving the configuration information, the first communication apparatus may report the first information to the access network device. Alternatively, that the configuration information is used by the first communication apparatus to report first information may include: The configuration information can indicate the first communication apparatus to report the first information to the access network device.

In a possible implementation, the configuration information includes a related configuration used by the first communication apparatus to report the first information to the access network device. Correspondingly, the first communication apparatus reports the first information to the access network device based on the related configuration included in the configuration information.

In an example, the configuration information sent by the access network device to the first communication apparatus includes BSR configuration (BSR-config) information used to report a buffer status report (buffer state report, BSR). For example, the BSR-config information includes timer duration information. The first communication apparatus reports the BSR to a distributed unit of the access network device based on the BSR-config information, and the distributed unit of the access network device reports the buffer status (buffer state, BS) information to a subscriber unit of the access network device. In the foregoing manner, the configuration information does not indicate the first communication apparatus to report the BS information to the access network device. More specifically, the first communication apparatus naturally reports the BS information to the access network device based on the BSR-config information, instead of reporting the BS information due to an indication function of the BSR-config information.

In conclusion, the configuration information can be used by the first communication apparatus to report the first information to the access network device. That the first communication apparatus reports the first information to the access network device may not be performed based on an indication function of the configuration information.

Optionally, that the first communication apparatus reports the first information to the access network device may alternatively be performed based on an indication function of the configuration information. This is not specifically limited in this application.

The first information can be used by the access network device to determine the network congestion degree between the first communication apparatus and the access network device.

S320: The first communication apparatus reports the first information to the access network device.

Correspondingly, the access network device receives the first information from the first communication apparatus.

Specifically, the first information reported by the first communication apparatus is associated with the BS information of the first communication apparatus. The access network device cannot perceive the BS information of the first communication apparatus. In other words, the access network device cannot perceive information about an amount of to-be-uploaded data (or length information of an uplink buffer queue) on a first communication apparatus side.

Specifically, it is difficult for the access network device to obtain or perceive the BS information of the first communication apparatus. Therefore, the access network device indicates the first communication apparatus to report the first information associated with the BS information of the first communication apparatus (or the first communication apparatus reports the first information to the access network device after receiving the configuration information). The access network device more accurately determines, based on the first information reported by the first communication apparatus, the network congestion degree between the first communication apparatus and the access network device. In this way, network congestion can be effectively avoided.

Specifically, when the access network device indicates a higher network congestion perceiving degree to a core network device, the core network device indicates, based on the higher network congestion perceiving degree, to adjust a data transmission rate of the first communication apparatus (for example, if the network congestion is severe, the core network device may indicate the first communication apparatus to reduce the data transmission rate to a very low level; or if the network congestion is moderate, the core network device may indicate the first communication apparatus to reduce the data transmission rate to a moderate level). Therefore, the network congestion degree between the first communication apparatus and the access network device can be effectively alleviated.

It should be understood that accuracy of adjusting the data transmission rate of the first communication apparatus by the core network device is associated with accuracy of perceiving the network congestion degree by the access network device. When the accuracy of perceiving the network congestion degree by the access network device is high, the core network device can more accurately adjust the data transmission rate of the first communication apparatus.

In a possible implementation, the first communication apparatus reports the first information to the access network device by using the following signaling:
(a) a MAC control element (MAC control element, MAC CE) or an RLC control PDU;
(b) a PDCP control PDU; and
(c) RRC signaling.

For descriptions of the foregoing signaling, refer to the following sections. Details are provided herein.

In conclusion, the access network device more accurately determines the network congestion degree between the first communication apparatus and the access network device based on the first information reported by the first communication apparatus. In addition, because the first information is associated with the BS information of the first communication apparatus, the access network device can perceive information about a buffered data amount of the first communication apparatus, and more accurately perceive the network congestion degree between the access network device and the first communication apparatus based on the information. In this way, the network congestion can be effectively avoided.

In a possible implementation, the first information includes at least one of the following:
the BS information, a data transmission latency, or an indication parameter.

In Example #1, the first communication apparatus can report the BS information to the access network device. It should be understood that, because the BS information of the first communication apparatus cannot be perceived by the access network device, the access network device may indicate the first communication apparatus to report the BS information of the first communication apparatus (the first communication apparatus may report the BS information to the access network device based on the related configuration in the configuration information after receiving the configuration information). Then, the access network device more accurately determines the network congestion degree between the first communication apparatus and the access network device based on the BS information reported by the first communication apparatus. In this way, the core network device is supported in more accurately adjusting the data transmission rate of the first communication apparatus.

Specifically, the BS information of the first communication apparatus includes an amount of to-be-transmitted data of at least one DRB. An amount of to-be-transmitted data of each DRB may include an amount of to-be-transmitted data at a PDCP layer and an amount of to-be-transmitted data at an RLC layer. If the DRB is a split bearer, the BS information reported by the first communication apparatus to the access network device may be a sum of the amount of the to-be-transmitted data at the PDCP layer and an amount of to-be-transmitted data in a plurality of RLC entities associated with the PDCP layer.

Optionally, the BS information may reuse a BS calculation method in a BSR mechanism. To be specific, the first communication apparatus reports a BS index value to the access network device, where the BS index value indicates that a buffered data amount of one DRB is within a preset value range. In other words, the BS information reported by the first communication apparatus to the access network device includes the BS index value.

Optionally, the first communication apparatus can report a specific value of the buffered data amount to the access network device, for example, a value expressed as a byte. In other words, the BS information reported by the first communication apparatus to the access network device includes the value of the buffered data amount.

In conclusion, the BS information can cause the access network device to perceive the information about the amount of the to-be-uploaded data of the first communication apparatus. Optionally, the access network device can perceive more accurately, with reference to the BS information and an average uplink transmission latency, the network congestion between the first communication apparatus and the access network device.

In Example #2, the first communication apparatus can report the data transmission latency to the access network device. The data transmission latency is associated with the BS information.

Specifically, an association relationship between the data transmission latency and the BS information may include: The data transmission latency can reflect the BS information of the first communication apparatus; or information about the data transmission latency includes the BS information of the first communication apparatus. In this way, the access network device can more accurately determine the network congestion degree between the first communication apparatus and the access network device based on the data transmission latency reported by the first communication apparatus. In this way, the core network device is supported in more accurately adjusting the data transmission rate of the first communication apparatus.

Optionally, the data transmission latency may include a D1, or may include a new latency associated with the BS information (for example, the D1 is designed to be capable of associating with the BS information).

In Example #3, the first communication apparatus can report the indication parameter to the access network device. The indication parameter is associated with at least one of the BS information and the data transmission latency.

Specifically, that the indication parameter is associated with at least one of the BS information and the data transmission latency does not limit a case in which the indication parameter is associated with another parameter. For example, the indication parameter may be associated with a QoS flow. Therefore, the indication parameter may be associated with the BS information, may be associated with the data transmission latency, may be associated with both the BS information and the data transmission latency, or may be associated with another parameter (for example, the QoS flow) other than the BS information and the data transmission latency. This is not limited in this application.

In a possible implementation, the BS information or the data transmission latency is based on a DRB granularity or a QoS flow granularity. For example, the first information reported by the first communication apparatus to the access network device can reflect network congestion degree information of at least one DRB or at least one QoS flow. Correspondingly, the access network device may determine network congestion degree information between the first communication apparatus and the access network device based on the network congestion degree information of the at least one DRB or the at least one QoS flow. In this way, the network congestion can be more effectively avoided.

The first information based on the at least one QoS flow includes: The BS information includes an amount of to-be-transmitted data of the at least one QoS flow. Alternatively, the first information based on the at least one QoS flow may include: The data transmission latency includes a transmission latency of the at least one QoS flow, and the like.

In a possible implementation, the indication parameter can indicate, to the access network device, the network congestion degree between the first communication apparatus and the access network device. Correspondingly, the access network device directly determines the network congestion degree between the first communication apparatus and the access network device based on the indication parameter.

In a possible implementation, the indication parameter includes proportion information. For example, the proportion information may include a value, for example, 80% or 90%. The proportion information can indicate the network congestion degree between the first communication apparatus and the access network device. For example, 90% indicates that the network congestion degree between the first communication apparatus and the access network device is very high, and 50% indicates that the network congestion degree between the first communication apparatus and the access network device is very low.

In a possible implementation, the indication parameter includes level information. For example, the level information may include a high level, a medium level, or the like. The level information can indicate the network congestion degree between the first communication apparatus and the access network device. For example, the high level indicates that the network congestion degree between the first communication apparatus and the access network device is very high, and a low level indicates that the network congestion degree between the first communication apparatus and the access network device is very low.

Specifically, the proportion information and the level information have a specific mapping relationship with the BS information and/or the data transmission latency. For example, in this application, a protocol-predefined mapping relationship between a proportion or a level and the BS information and/or the data transmission latency is supported. Optionally, a mapping relationship between a proportion or a level and the BS information and/or the data transmission latency is configured by a network device. For details, refer to Table 1 (content shown in Table 1 may correspond to both the two scenarios: protocol predefinition/network device configuration).

**Table 1**

| Level information | Data transmission latency |
|---|---|
| High | X > 20 ms |
| Medium | 10 ms ≤ X < 20 ms |
| Low | 5 ms ≤ X < 10 ms |
| No network congestion | X < 5 ms |

Table 1 shows a mapping relationship between the level information and the data transmission latency. For example, when determining that the data transmission latency is greater than 20 ms, the first communication apparatus determines, based on Table 1, that the network congestion degree between the first communication apparatus and the access network device is a high-level congestion degree. When determining that the data transmission latency is greater than or equal to 10 ms and the data transmission latency is less than 20 ms, the first communication apparatus determines, based on Table 1, that the network congestion degree between the first communication apparatus and the access network device is a medium-level congestion degree. When determining that the data transmission latency is greater than or equal to 5 ms and the data transmission latency is less than 10 ms, the first communication apparatus determines, based on Table 1, that the network congestion degree between the first communication apparatus and the access network device is a low-level congestion degree. When determining that the data transmission latency is less than 5 ms, the first communication apparatus determines, based on Table 1, that no network congestion occurs between the first communication apparatus and the access network device.

In conclusion, the first communication apparatus can determine, based on the data transmission latency and Table 1, the level information to be reported to the access network device. In this way, the access network device can directly determine the network congestion degree between the first communication apparatus and the access network device.

In an example, there may also be a mapping relationship between the level information and the BS information. For details, refer to descriptions of Table 1. Details are not described herein again. Similarly, for descriptions of the proportion information, refer to descriptions of the level information. Details are not described herein again.

In an example, the indication parameter is determined by the first communication apparatus based on the BS information, may be determined by the first communication apparatus based on the data transmission latency, or may be determined by the first communication apparatus based on both the BS information and the data transmission latency.

In conclusion, by using the indication parameter, in this application, the access network device is supported in directly determining the network congestion degree between the first communication apparatus and the access network device. This can reduce processing time of the access network device, and can also reduce time for the core network device to indicate the first communication apparatus to reduce the data transmission rate.

In a possible implementation, the first communication apparatus can periodically report the first information to the access network device. A reporting periodicity of the first information may be configured by the network device (for example, the access network device).

Optionally, the network device (for example, the access network device) indicates or configures the first communication apparatus to periodically report the network congestion degree information of the at least one DRB or the at least one QoS flow (or the network device (for example, the access network device) indicates or configures the first communication apparatus to periodically report the first information that is based on at least one DRB granularity or at least one QoS flow granularity). This can help the network device (for example, the access network device) determine the network congestion degree between the first communication apparatus and the access network device.

In a possible implementation, the first communication apparatus can report the first information to the access network device after receiving request information that is sent by the access network device and that is used to request the first communication apparatus to report the first information to the access network device.

Optionally, the request information may be considered as a possible implementation of the configuration information. Specifically, the access network device requests, in a form of sending the configuration information to the first communication apparatus, the first communication apparatus to report the first information to the access network device.

Optionally, the request information may alternatively be information independent of the configuration information. Specifically, the access network device may send the request information and the configuration information to the first communication apparatus at the same time. The request information is used to request the first communication apparatus to report the first information to the access network device, and the configuration information is used to configure a specific configuration for the first communication apparatus to report the first information to the access network device.

In a possible implementation, the network device (for example, the access network device) configures a first trigger condition. When determining that the first trigger condition is met, the first communication apparatus is triggered to report the first information to the access network device. For example, the first trigger condition includes: A change of BS information of a DRB or a QoS flow exceeds a specific degree. For example, when determining that an increase or decrease in a buffered data amount of the DRB or the QoS flow exceeds a specific threshold, the first communication apparatus determines that the first trigger condition is met, and is triggered to report the first information to the access network device.

In a possible implementation, the network device (for example, the access network device) configures a second trigger condition. When determining that the second trigger condition is met, the first communication apparatus is triggered to report the first information to the access network device. For example, the second trigger condition includes: The network congestion degree changes. For example, when determining that the network congestion degree between the first communication apparatus and the access network device changes (for example, from a slight network congestion degree to a severe network congestion degree), the first communication apparatus determines that the second trigger condition is met, and is triggered to report the first information to the access network device.

In conclusion, a condition or a requirement for reporting the first information by the first communication apparatus to the access network device is not limited in this application.

It should be noted that, in this application, that the access network device indicates, to the core network device, the network congestion degree between the first communication apparatus and the access network device is not limited, and how the core network device indicates to adjust the data transmission rate of the first communication apparatus is not limited. For example, the access network device may indicate, to the core network device, the network congestion degree between the first communication apparatus and the access network device by using an explicit congestion notification (explicit congestion notification, ECN) solution. For specific descriptions of the ECN solution, refer to an existing protocol. Details are not described herein.

The following further describes the communication method 300 shown in FIG. 3 with reference to other accompanying drawings.

FIG. 4 is a schematic interaction flowchart of a communication method 400 according to an embodiment of this application. As shown in FIG. 4, the method 400 includes the following steps.

S401: A first communication apparatus sends first information to a control unit of an access network device.

Correspondingly, the control unit receives the first information from the first communication apparatus.

Specifically, the control unit may be a CU-CP, or may have another name, and may correspond to a module or a unit in another communication network architecture. This is not limited in this application.

It may be understood that, in this application, the control unit refers to another unit configured to implement a same or similar function of the CU-CP. Therefore, the control unit may be used as an upper-level concept of the CU-CP.

In a possible implementation, the first communication apparatus sends the first information to the control unit by using RRC signaling.

Optionally, when reporting a D1 to the access network device by using the RRC signaling, the first communication apparatus also reports the first information (the first information includes the D1).

It should be understood that the foregoing configuration information may be delivered by the control unit to the first communication apparatus.

S402: The control unit of the access network device reports the first information to a subscriber unit of the access network device.

Correspondingly, the subscriber unit receives the first information from the control unit.

Specifically, the subscriber unit may be a CU-UP, or may have another name, and corresponds to a module or a unit in another communication network architecture. This is not limited in this application.

It may be understood that, in this application, the subscriber unit refers to another unit configured to implement a same or similar function of the CU-UP unit. Therefore, the subscriber unit may be used as an upper-level concept of the CU-UP.

Specifically, after receiving the first information, the control unit may directly send the first information to the subscriber unit, or may change a form of the first information received by the control unit, and then send changed first information (the form of the first information may change, but an essence of the first information does not change) to the subscriber unit.

For ease of description, this application focuses on describing an essential behavior of sending the first information by the control unit to the subscriber unit, and does not limit a process of sending the first information by the control unit to the subscriber unit and an information form.

In a possible implementation, after receiving the first information reported by the first communication apparatus, the control unit reports the first information to the subscriber unit by using E1AP information. The E1AP information includes GNB-CU-CP MEASUREMENT RESULTS INFORMATION information.

Optionally, when reporting the D1 to the subscriber unit, the control unit also reports the first information.

In a possible implementation, in a DC scenario, if an anchor of a PDCP layer on a network device side is on an auxiliary network device, the first communication apparatus can report the first information to a control unit of a primary network device by using signaling radio bearer (signaling radio bearer, SRB) 1 information. Then, the control unit of the primary network device reports the first information to a subscriber unit of the auxiliary network device. Alternatively, the first communication apparatus can report the first information to a control unit of the auxiliary network device by using SRB3 information. Then, the control unit of the auxiliary network device reports the first information to a subscriber unit of the auxiliary network device. This is not limited in this application.

In conclusion, in this application, the subscriber unit of the access network device is supported in obtaining the first information reported by the first communication apparatus, and more accurately determining a network congestion degree between the first communication apparatus and the access network device based on the first information.

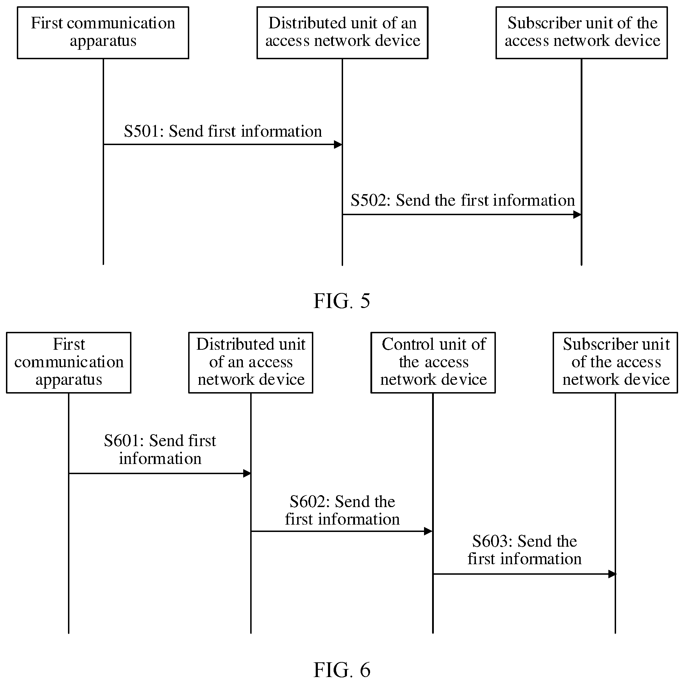

FIG. 5 is a schematic interaction flowchart of a communication method 500 according to an embodiment of this application. As shown in FIG. 5, the method 500 includes the following steps.

S501: A first communication apparatus sends first information to a distributed unit of an access network device.

Correspondingly, the distributed unit receives the first information from the first communication apparatus.

Specifically, the distributed unit may be a DU, or may have another name, and corresponds to a module or a unit in another communication network architecture. This is not limited in this application.

It may be understood that, in this application, the distributed unit refers to another unit configured to implement a same or similar function of the DU. Therefore, the distributed unit may be used as an upper-level concept of the DU.

It may be understood that the foregoing configuration information is configured by a control unit of the access network device and delivered to the first communication apparatus.

S502: The distributed unit of the access network device reports the first information to a subscriber unit of the access network device.

Correspondingly, the subscriber unit receives the first information from the distributed unit.

Specifically, after receiving the first information reported by the first communication apparatus, the distributed unit may directly send the first information to the subscriber unit, or may change a form of the first information received by the distributed unit, and then send changed first information (the form of the first information may change, but an essence of the first information does not change) to the subscriber unit.

For ease of description, this application focuses on an essential behavior of sending the first information by the distributed unit to the subscriber unit, and does not limit a process of sending the first information by the distributed unit to the subscriber unit and an information form.

In a possible implementation, after receiving the first information reported by the first communication apparatus, the distributed unit may report the first information to the subscriber unit through an F1-U interface. For example, the distributed unit may report the first information to the subscriber unit by using an assistance information data (assistance information data, ASSISTANCE INFORMATION DATA) frame on the FI-U interface.

Optionally, the distributed unit may include the first information in a general packet radio service tunneling protocol uplink (general packet radio service tunneling protocol uplink, GTP-U) packet header of a data packet sent to a central unit (for example, a CU).

In a possible implementation, the distributed unit reports the first information to the subscriber unit only when the distributed unit determines that a trigger condition is met. For example, when a change of a buffer status (the first information includes BS information) of a DRB or a QoS flow exceeds a specific degree, for example, when finding that a change of a buffered data amount of the DRB or the QoS flow exceeds a specific threshold, the distributed unit may be triggered to report the BS information (the first information includes the BS information) to the subscriber unit. The foregoing threshold is configured by the control unit, and is sent by the control unit to the distributed unit.

In a possible implementation, the distributed unit reports the first information to the subscriber unit only after receiving request information that is sent by the subscriber unit and that is used to request to report the first information.

In a possible implementation, the distributed unit periodically reports the first information to the subscriber unit. A reporting periodicity of the first information may be configured by the control unit, and the control unit sends the reporting periodicity of the first information to the distributed unit.

In a possible implementation, for a split bearer in a DC architecture, the control unit may indicate a split threshold of the first communication apparatus (for example, the control unit configures a split threshold X for the split bearer of the first communication apparatus, and when an amount of to-be-transmitted data in a PDCP entity of the bearer of the first communication apparatus does not exceed the split threshold X, the first communication apparatus delivers a data packet only to a primary RLC entity (the primary RLC entity is specified by a network device in advance) associated with the PDCP entity; or when an amount of to-be-transmitted data in the PDCP entity exceeds the split threshold X, the first communication apparatus may deliver a data packet to a plurality of associated RLC entities) to the subscriber unit, to help the subscriber unit determine more accurate BS information (the first information includes the BS information) of the split bearer, to determine more accurate network congestion degree information.

In conclusion, in this application, the subscriber unit of the access network device is supported in obtaining the first information reported by the first communication apparatus, and more accurately determining a network congestion degree between the first communication apparatus and the access network device based on the first information.

FIG. 6 is a schematic interaction flowchart of a communication method 600 according to an embodiment of this application. As shown in FIG. 6, the method 600 includes the following steps.

S601: A first communication apparatus sends first information to a distributed unit of an access network device.

Correspondingly, the distributed unit receives the first information from the first communication apparatus.

S602: The distributed unit of the access network device reports the first information to a control unit of the access network device.

Correspondingly, the control unit receives the first information from the distributed unit.

Specifically, the distributed unit may report the first information to the control unit through an F1-C interface. For example, the distributed unit reports the first information to the control unit by using GNB-DU RESOURCE COORDINATION RESPONSE information/GNB-DU STATUS INDICATION.

It may be understood that the foregoing configuration information is configured by the control unit of the access network device and delivered to the first communication apparatus.

In a possible implementation, after receiving the first information reported by the first communication apparatus, the distributed unit may be triggered to report the first information to the control unit.

In a possible implementation, when determining that a change of a buffer status (the first information includes BS information) exceeds a specific degree, for example, when finding that a change of a buffered data amount of a DRB or a QoS flow exceeds a specific threshold, the distributed unit is triggered to report the BS information to the control unit.

In a possible implementation, after receiving, from the control unit, information used to request to perform reporting, the distributed unit reports the BS information to the control unit.

In a possible implementation, the distributed unit periodically reports the BS information to the control unit. A reporting periodicity of the first information may be configured by the control unit, and the control unit sends the reporting periodicity of the first information to the distributed unit.

S603: The control unit of the access network device reports the first information to a subscriber unit of the access network device.

Correspondingly, the subscriber unit receives the first information from the control unit.

For specific descriptions of S603, refer to descriptions of S402. Details are not described herein again.

In conclusion, in this application, the subscriber unit of the access network device is supported in obtaining the first information reported by the first communication apparatus, and more accurately determining a network congestion degree between the first communication apparatus and the access network device based on the first information.

In a possible implementation, in this application, the first communication apparatus is supported in directly reporting the first information to the subscriber unit of the access network device. For example, the first information is carried in a PDCP control PDU at a PDCP layer, and the access network device may receive and parse the PDCP control PDU sent by the first communication apparatus, and obtain the first information from the PDCP control PDU.

In a possible implementation, the first information is based on at least one DRB granularity, or may be based on at least one QoS flow granularity. This is not limited in this application.

In a possible implementation, when the first information includes the BS information, in this application, a network device is supported in configuring, for the first communication apparatus, a logic channel group (logic channel group, LCG) including the at least one DRB or QoS flow. The distributed unit can obtain the BS information of the at least one DRB or QoS flow based on the LCG.

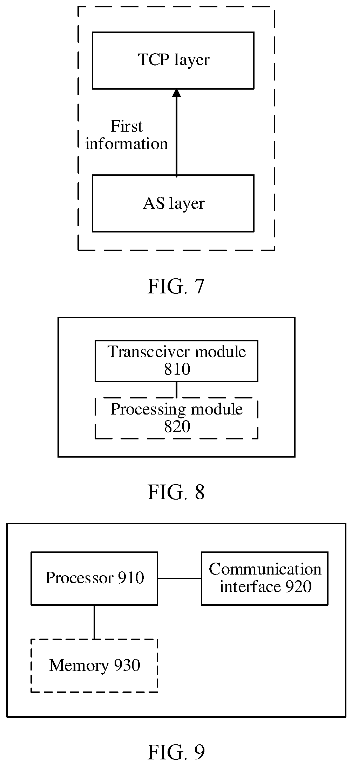

It should be noted that, in the technical solutions shown in FIG. 3 to FIG. 6, this application mainly describes a technical solution in which the access network device determines the network congestion degree between the first communication apparatus and the access network device, and the access network device indicates the core network device to adjust the data transmission rate of the first communication apparatus. However, the technical solutions disclosed in this application are not limited thereto. For details, refer to FIG. 7.

FIG. 7 is a schematic flowchart of a communication method 700 according to an embodiment of this application. As shown in FIG. 7, an access stratum (access stratum, AS) of a first communication apparatus determines proportion information/level information based on a current data transmission latency and/or BS information and the foregoing mapping relationship (referring to Table 1). After the proportion information/level information is determined, the first communication apparatus reports first information (including the proportion information/level information) to a transmission control protocol (transmission control protocol, TCP) layer (or an application layer). The TCP layer determines a network congestion degree between the first communication apparatus and an access network device based on the first information, and more quickly adjusts a data transmission rate of the first communication apparatus based on the specific network congestion degree. In this way, network congestion can be more quickly alleviated or avoided.

In conclusion, when determining that the network congestion occurs during data transmission between the first communication apparatus and the access network device, the first communication apparatus may automatically adjust the data transmission rate. In this way, the network congestion degree between the first communication apparatus and the access network device can be more quickly alleviated.

It should be noted that a name of the first information is not limited in this application, and the first information may have another name that can implement a same or similar function. This is not limited in this application.

It should be further noted that, according to the technical solutions shown in FIG. 3 to FIG. 7, in this application, the communication system shown in FIG. 1 is enabled to support an L4S (low latency, low loss, scalable throughput) solution, so that impact that is of the network congestion and that reduces service experience can be avoided, and the communication system can better support a real-time interactive service. For descriptions of the L4S solution, refer to an existing protocol. Details are not described herein.

The foregoing describes the method embodiments in embodiments of this application, and the following describes corresponding apparatus embodiments.

To implement functions in the methods provided in embodiments of this application, both a terminal and a network device may include a hardware structure and/or a software module, and implement functions in the form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a block diagram of a communication apparatus 800 according to an embodiment of this application. The communication apparatus 800 may be the network device (for example, the access network device) in the foregoing embodiments, or may be a chip or a module in the network device, and is configured to implement the methods in the foregoing embodiments. The communication apparatus 800 includes a transceiver module 810. The following describes the transceiver module 810 by using an example.

The transceiver module 810 may include a sending module and a receiving module that are respectively configured to implement a sending function or a receiving function in the foregoing method embodiments. The transceiver module 810 may further include a processing module, configured to implement a function other than sending or receiving.

The communication apparatus 800 is configured to implement a function of a first communication apparatus. For example, the transceiver module 810 is configured to receive configuration information from the access network device, where the configuration information is used by the first communication apparatus to report first information, and the first information is used to determine a network congestion degree between the first communication apparatus and the access network device. The transceiver module 810 is further configured to send the first information to the access network device.

Optionally, the communication apparatus 800 may further include a processing module 820, configured to perform another function other than receiving and sending functions, for example, determining the first information.

Optionally, the communication apparatus 800 further includes a storage module 830 (not shown in FIG. 8), and the storage module 830 is configured to store a program or code used to perform the foregoing methods.

The foregoing content is merely used as an example for description. When the communication apparatus 800 is configured to implement the first communication apparatus, the communication apparatus 800 is responsible for performing the methods or steps related to the first communication apparatus in the foregoing method embodiments.

The communication apparatus 800 is the access network device. For example, the transceiver module 810 is configured to send configuration information to a first communication apparatus, where the configuration information is used by the first communication apparatus to report first information, and the first information is used to determine a network congestion degree between the first communication apparatus and the access network device. The transceiver module 810 is further configured to receive the first information from the first communication apparatus.

It should be understood that when the communication apparatus 800 is the access network device, the transceiver module 810 may be a module that is in a control unit/subscriber unit/distributed unit of the access network device and that is configured to implement receiving and sending functions.

Optionally, the communication apparatus 800 may further include a processing module 820, and the processing module 820 is configured to perform another function other than the receiving and sending functions, for example, determining the network congestion degree between the first communication apparatus and the access network device based on the first information.

Optionally, the communication apparatus 800 further includes a storage module 830 (not shown in FIG. 8), and the storage module 830 is configured to store a program or code used to perform the foregoing methods.

The foregoing content is merely used as an example for description. When the communication apparatus 800 is configured to implement the access network device, the communication apparatus 800 is responsible for performing the methods or steps related to the access network device in the foregoing method embodiments.

In addition, for implementation of each operation in FIG. 8, refer to corresponding descriptions of content shown in the foregoing method embodiments. Details are not described herein again.

FIG. 9 is a block diagram of a communication apparatus 900 according to an embodiment of this application. The communication apparatus 900 includes a processor 910 and a communication interface 920. The processor 910 and the communication interface 920 can be connected to each other through a bus 940 (not shown in FIG. 9). The communication apparatus 900 can be configured to implement a function of a first communication apparatus, and can also be configured to implement a function of an access network device.

Optionally, the communication apparatus 900 further includes a memory 930.

The memory 930 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory is any other medium that can carry or store expected program code in a form of an instruction or a data structure and that can be accessed by a computer, but is not limited thereto. For example, the memory 930 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module. For example, the processor 910 may be one or more central processing units (central processing units, CPUs). When the processor 910 is one CPU, the CPU may be a single-core CPU, or may be a multi-core CPU.

When the communication apparatus 900 is configured to implement the function of the first communication apparatus, the processor 910 is configured to perform, for example, the following operations: receiving configuration information from the access network device; and sending first information to the access network device.

The foregoing content is merely used as an example for description. When the communication apparatus 900 is configured to implement the function of the first communication apparatus, the communication apparatus 900 is responsible for performing the methods or steps related to the first communication apparatus in the foregoing method embodiments.

When the communication apparatus 900 is configured to implement the function of the access network device, the processor 910 is configured to perform, for example, the following operations: sending configuration information to the first communication apparatus; and receiving first information from the first communication apparatus.

The foregoing content is merely used as an example for description. When the communication apparatus 900 is configured to implement the function of the access network device, the communication apparatus 900 is responsible for performing the methods or steps related to the access network device in the foregoing method embodiments.

The foregoing descriptions are merely an example for description. For specific content, refer to the content shown in the foregoing method embodiments. In addition, for implementation of each operation in FIG. 9, refer to corresponding descriptions of the method embodiment shown in FIG. 3.

The communication apparatuses shown in FIG. 8 and FIG. 9 are configured to implement content described in the foregoing method embodiments. Therefore, for specific execution steps and methods of the communication apparatuses shown in FIG. 8 and FIG. 9, refer to the content described in the foregoing method embodiments.

It should be understood that the foregoing transceiver module may include a sending module and a receiving module. The sending module is configured to perform a sending action of the communication apparatus, and the receiving module is configured to perform a receiving action of the communication apparatus. For ease of description, the sending module and the receiving module are combined into one transceiver module in embodiments of this application. Unified descriptions are provided herein, and details are not described below.

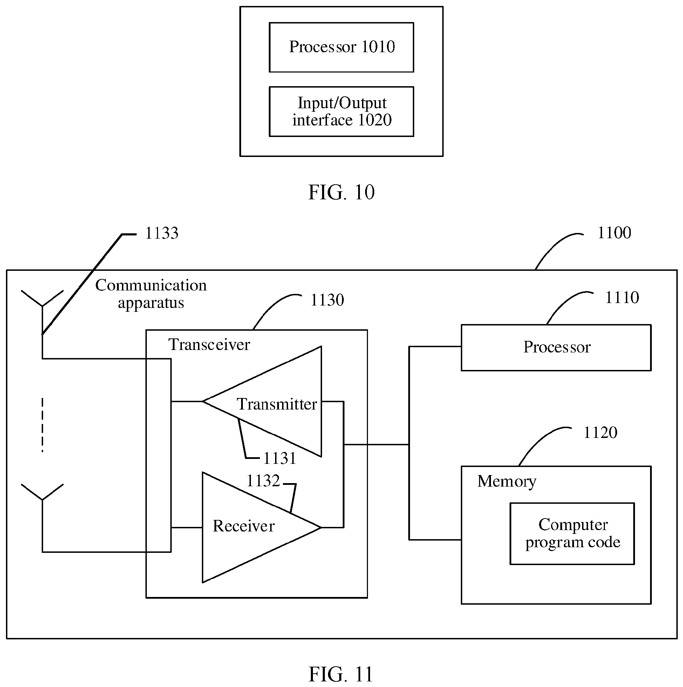

FIG. 10 is a diagram of a communication apparatus 1000 according to an embodiment of this application. The communication apparatus 1000 may be configured to implement a function of the access network device or the first communication apparatus in the foregoing methods. The communication apparatus 1000 may be a chip in the access network device or the first communication apparatus. The communication apparatus 1000 includes an input/output interface 1020 and a processor 1010. The input/output interface 1020 may be an input/output circuit. The processor 1010 may be a signal processor, a chip, or another integrated circuit that can implement the methods in this application. The input/output interface 1020 is configured to input or output a signal or data.

For example, when the communication apparatus 1000 is the first communication apparatus, the input/output interface 1020 is configured to receive configuration information from the access network device, and the input/output interface 1020 is further configured to send first information to the access network device. The processor 1010 is configured to determine the first information. The processor 1010 is further configured to perform some or all steps of any method provided in this application.

For example, when the communication apparatus 1000 is the access network device, the input/output interface 1020 is configured to send the configuration information to the first communication apparatus, and the input/output interface 1020 is further configured to receive the first information from the first communication apparatus.

In a possible implementation, the processor 1010 executes instructions stored in a memory, to implement the function implemented by the first communication apparatus or the access network device.

Optionally, the communication apparatus 1000 further includes the memory. Optionally, the processor and the memory are integrated together. Optionally, the memory is outside the communication apparatus 1000.

In a possible implementation, the processor 1010 may be a logic circuit, and the processor 1010 inputs/outputs a message or signaling through the input/output interface 1020. The logic circuit may be a signal processor, a chip, or another integrated circuit that can implement the methods in embodiments of this application.

The foregoing descriptions of the communication apparatus 1000 in FIG. 10 are merely an example for description. The communication apparatus 1000 can be configured to perform the methods in the foregoing embodiments. For specific content, refer to descriptions of the foregoing method embodiments. Details are not described herein again.

FIG. 11 is a block diagram of a communication apparatus 1100 according to an embodiment of this application. The communication apparatus 1100 may be an access network device or a chip. The communication apparatus 1100 may be configured to perform the foregoing operations performed by the access network device.

When the communication apparatus 1100 is the access network device, for example, a base station, FIG. 11 is a simplified diagram of a structure of the base station. The base station includes a part 1110, a part 1120, and a part 1130. The part 1110 is mainly configured to: perform baseband processing, control the base station, and the like. The part 1110 is usually a control center of the base station, may be usually referred to as a processor, and is configured to control the base station to perform a processing operation on a network device side in the foregoing method embodiments. The part 1120 is mainly configured to store computer program code and data. The part 1130 is mainly configured to: receive and send a radio frequency signal, and perform conversion between a radio frequency signal and a baseband signal. The part 1130 may be usually referred to as a transceiver module, a transceiver machine, a transceiver circuit, a transceiver, or the like. The transceiver module in the part 1130 may also be referred to as a transceiver machine, a transceiver, or the like, and includes an antenna 1133 and a radio frequency circuit (not shown in FIG. 11). The radio frequency circuit is mainly configured to perform radio frequency processing. Optionally, in the part 1130, a component configured to implement a receiving function may be considered as a receiver machine, and a component configured to implement a sending function may be considered as a transmitter machine. In other words, the part 1130 includes a receiver machine 1132 and a transmitter machine 1131. The receiver machine may also be referred to as a receiving module, a receiver, a receiver circuit, or the like, and the transmitter machine may be referred to as a transmitting module, a transmitter, a transmitter circuit, or the like.

The part 1110 and the part 1120 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards share one or more processors at the same time.

In an implementation, the transceiver module in the part 1130 is configured to perform a receiving and sending-related process performed by the access network device in the embodiments shown in FIG. 3 to FIG. 6. The processor in the part 1110 is configured to perform a processing-related process performed by the access network device in the embodiments shown in FIG. 3 to FIG. 6.

In another implementation, the processor in the part 1110 is configured to perform a processing-related process performed by the access network device in the embodiments shown in FIG. 3 to FIG. 6.

In another implementation, the transceiver module in the part 1130 is configured to perform a receiving and sending-related process performed by the access network device in the embodiments shown in FIG. 3 to FIG. 6.

It should be understood that FIG. 11 is merely an example rather than a limitation. The access network device including the processor, the memory, and the transceiver may not depend on the structures shown in FIG. 8 to FIG. 10.

When the communication apparatus 1100 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

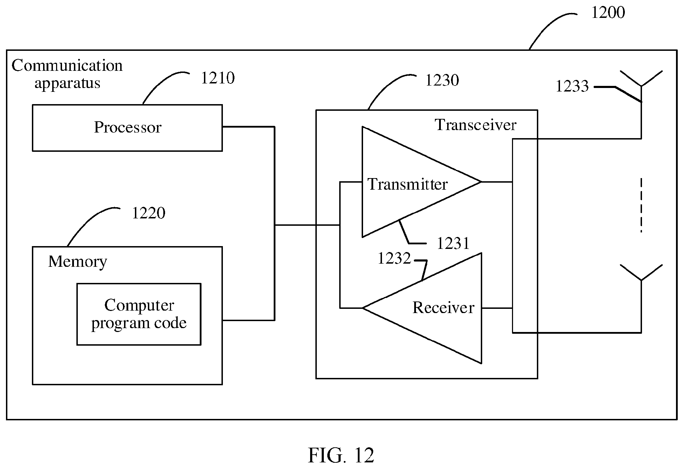

FIG. 12 is a block diagram of a communication apparatus 1200 according to an embodiment of this application. The communication apparatus 1200 may be a first communication apparatus, a processor of the first communication apparatus, or a chip. The communication apparatus 1200 may be configured to perform an operation performed by the first communication apparatus or the first communication apparatus in the foregoing method embodiments.

When the communication apparatus 1200 is the first communication apparatus, FIG. 12 is a simplified diagram of a structure of the first communication apparatus. As shown in FIG. 12, the first communication apparatus includes a processor, a memory, and a transceiver. The memory may store computer program code. The transceiver includes a transmitter machine 1231, a receiver machine 1232, a radio frequency circuit (not shown in FIG. 12), an antenna 1233, and an input/output apparatus (not shown in FIG. 12).

The processor is mainly configured to: process a communication protocol and communication data, control a terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver module of the terminal device, and the processor that has a processing function may be considered as a processing module of the terminal device.

As shown in FIG. 12, the first communication apparatus includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, in the transceiver 1230, a component configured to implement a receiving function may be considered as a receiving module, and a component configured to implement a sending function may be considered as a sending module. In other words, the transceiver 1230 includes a receiver and a transmitter. The transceiver may also be referred to as a transceiver machine, a transceiver module, a transceiver circuit, or the like. The receiver may also be referred to as a receiver machine, a receiving module, a receiver circuit, or the like. The transmitter may also be sometimes referred to as a transmitter machine, a transmitting module, a transmitter circuit, or the like.

For example, in an implementation, the processor 1210 is configured to perform processing actions on the first communication apparatus side in the embodiments shown in FIG. 3 to FIG. 7, and the transceiver 1230 is configured to perform receiving and sending actions on the first communication apparatus side in FIG. 3 to FIG. 7.

For example, in an implementation, the processor 1210 is configured to perform the processing actions on the first communication apparatus side in the embodiments shown in FIG. 3 to FIG. 7, and the transceiver 1230 is configured to perform the receiving and sending actions on the first communication apparatus side in FIG. 3 to FIG. 7.

It should be understood that FIG. 12 is merely an example rather than a limitation. The terminal device including the transceiver module and the processing module may not depend on the structures shown in FIG. 8 to FIG. 10.

When the communication apparatus 1200 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor. The processor is configured to invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes the memory, and the memory is configured to store a computer program or the code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

This application further provides a communication system. The communication system includes a network device 110, a network device 120, and a core network element. The network device 110 is configured to perform the foregoing method, the network device 120 is configured to perform the foregoing method, and the core network element 130 is configured to perform the foregoing method. For specific descriptions, refer to the foregoing descriptions. Details are not described herein again.

In descriptions in embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example, an illustration, or a description.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application]

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device, the access network device, or a core network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, comprising:
receiving, by a first communication apparatus, configuration information from an access network device, wherein the configuration information is used by the first communication apparatus to report first information, the first information is used to determine a network congestion degree between the first communication apparatus and the access network device, and the first information is associated with buffer status information of the first communication apparatus; and
reporting, by the first communication apparatus, the first information to the access network device.

2. The method according to claim 1, wherein the reporting, by the first communication apparatus, the first information to the access network device comprises:
reporting, by the first communication apparatus, the first information to a subscriber unit of the access network device; or
reporting, by the first communication apparatus, the first information to a distributed unit of the access network device; or
reporting, by the first communication apparatus, the first information to a control unit of the access network device.

3. The method according to claim 1 or 2, wherein the first information comprises at least one of the following:
the buffer status information, a data transmission latency, or an indication parameter, wherein
the data transmission latency is associated with the buffer status information;
the indication parameter indicates the network congestion degree; and
the indication parameter is associated with at least one of the buffer status information and the data transmission latency.

4. The method according to claim 3, wherein that the indication parameter is associated with at least one of the buffer status information and the data transmission latency comprises:
the indication parameter is determined by the first communication apparatus based on the buffer status information; or
the indication parameter is determined by the first communication apparatus based on the data transmission latency; or
the indication parameter is determined by the first communication apparatus based on the buffer status information and the data transmission latency.

5. The method according to claim 3 or 4, wherein the indication parameter comprises at least one of the following:
proportion information or level information, wherein
the proportion information indicates the network congestion degree; and
the level information indicates the network congestion degree.

6. The method according to any one of claims 1 to 5, wherein the first information is associated with at least one data radio bearer or at least one quality of service flow.

7. A communication method, comprising:
sending, by an access network device, configuration information to a first communication apparatus, wherein the configuration information is used by the first communication apparatus to report first information, the first information is used to determine a network congestion degree between the first communication apparatus and the access network device, and the first information is associated with buffer status information of the first communication apparatus; and
receiving, by a subscriber unit of the access network device, the first information from the first communication apparatus.

8. The method according to claim 7, wherein the receiving, by a subscriber unit of the access network device, the first information from the first communication apparatus comprises:
receiving, by a distributed unit of the access network device, the first information from the first communication apparatus; and
sending, by the distributed unit, the first information to the subscriber unit.

9. The method according to claim 7, wherein the receiving, by a subscriber unit of the access network device, the first information from the first communication apparatus comprises:
receiving, by a control unit of the access network device, the first information from the first communication apparatus; and
sending, by the control unit, the first information to the subscriber unit.

10. The method according to claim 7, wherein the receiving, by a subscriber unit of the access network device, the first information from the first communication apparatus comprises:
receiving, by a distributed unit of the access network device, the first information from the first communication apparatus;
sending, by the distributed unit, the first information to a control unit of the access network device; and
sending, by the control unit, the first information to the subscriber unit.

11. The method according to any one of claims 7 to 10, wherein the first information comprises at least one of the following:
the buffer status information, a data transmission latency, or an indication parameter, wherein
the data transmission latency is associated with the buffer status information;
the indication parameter indicates the network congestion degree; and
the indication parameter is associated with at least one of the buffer status information and the data transmission latency.

12. The method according to claim 11, wherein that the indication parameter is associated with at least one of the buffer status information and the data transmission latency comprises:
the indication parameter is determined by the first communication apparatus based on the buffer status information; or
the indication parameter is determined by the first communication apparatus based on the data transmission latency; or
the indication parameter is determined by the first communication apparatus based on the buffer status information and the data transmission latency.

13. The method according to claim 11 or 12, wherein the indication parameter comprises at least one of the following:
proportion information or level information, wherein
the proportion information indicates the network congestion degree; and
the level information indicates the network congestion degree.

14. The method according to any one of claims 7 to 13, wherein the first information is associated with at least one data radio bearer or at least one quality of service flow.

15. A communication apparatus, comprising:
a transceiver unit, configured to receive configuration information from an access network device, wherein the configuration information is used by the communication apparatus to report first information, the first information is used to determine a network congestion degree between the communication apparatus and the access network device, and the first information is associated with buffer status information of the communication apparatus, wherein
the transceiver unit is further configured to report the first information to the access network device.

16. The apparatus according to claim 15, wherein the transceiver unit is further configured to:
report the first information to a subscriber unit of the access network device; or
report the first information to a distributed unit of the access network device; or
report the first information to a control unit of the access network device.

17. The apparatus according to claim 15 or 16, wherein the first information comprises at least one of the following:
the buffer status information, a data transmission latency, or an indication parameter, wherein
the data transmission latency is associated with the buffer status information;
the indication parameter indicates the network congestion degree; and
the indication parameter is associated with at least one of the buffer status information and the data transmission latency.

18. The apparatus according to claim 17, wherein that the indication parameter is associated with at least one of the buffer status information and the data transmission latency comprises:
the indication parameter is determined by the communication apparatus based on the buffer status information; or
the indication parameter is determined by the communication apparatus based on the data transmission latency; or
the indication parameter is determined by the communication apparatus based on the buffer status information and the data transmission latency.

19. The apparatus according to claim 17 or 18, wherein the indication parameter comprises at least one of the following:
proportion information or level information, wherein
the proportion information indicates the network congestion degree; and
the level information indicates the network congestion degree.

20. The apparatus according to any one of claims 15 to 19, wherein the first information is associated with at least one data radio bearer or at least one quality of service flow.

21. An access network device, comprising:
a control unit, configured to send configuration information to a first communication apparatus, wherein the configuration information is used by the first communication apparatus to report first information, wherein
the first information is used to determine a network congestion degree between the first communication apparatus and the access network device, and the first information is associated with buffer status information of the first communication apparatus; and
a subscriber unit, configured to receive the first information from the first communication apparatus.

22. The access network device according to claim 21, wherein the access network device further comprises a distributed unit, wherein
the distributed unit is configured to receive the first information from the first communication apparatus; and
the distributed unit is further configured to send the first information to the subscriber unit.

23. The access network device according to claim 21, wherein
the control unit is further configured to receive the first information from the first communication apparatus; and
the control unit is further configured to send the first information to the subscriber unit.

24. The access network device according to claim 21, wherein the access network device further comprises a distributed unit, wherein
the distributed unit is configured to receive the first information from the first communication apparatus;
the distributed unit is further configured to send the first information to the control unit;
the control unit is configured to receive the first information from the distributed unit; and
the control unit is further configured to send the first information to the subscriber unit.

25. The access network device according to any one of claims 21 to 24, wherein the first information comprises at least one of the following:
the buffer status information, a data transmission latency, or an indication parameter, wherein
the data transmission latency is associated with the buffer status information;
the indication parameter indicates the network congestion degree; and
the indication parameter is associated with at least one of the buffer status information and the data transmission latency.

26. The access network device according to claim 25, wherein that the indication parameter is associated with at least one of the buffer status information and the data transmission latency comprises:
the indication parameter is determined by the first communication apparatus based on the buffer status information; or
the indication parameter is determined by the first communication apparatus based on the data transmission latency; or
the indication parameter is determined by the first communication apparatus based on the buffer status information and the data transmission latency.

27. The access network device according to claim 25 or 26, wherein the indication parameter comprises at least one of the following:
proportion information or level information, wherein
the proportion information indicates the network congestion degree; and
the level information indicates the network congestion degree.

28. The access network device according to any one of claims 21 to 27, wherein the first information is associated with at least one data radio bearer or at least one quality of service flow.

29. A communication apparatus, comprising a processor, wherein the processor is configured to enable, by executing a computer program or instructions or by using a logic circuit, the communication apparatus to perform the method according to any one of claims 1 to 14.

30. The communication apparatus according to claim 29, wherein the communication apparatus further comprises a memory, and the memory is configured to store the computer program or the instructions.

31. The communication apparatus according to claim 29 or 30, wherein the communication apparatus further comprises a communication interface, and the communication interface is configured to input and/or output a signal.

32. A communication apparatus, comprising a logic circuit and an input/output interface, wherein the input/output interface is configured to input and/or output a signal, and the logic circuit is configured to perform the method according to any one of claims 1 to 14.

33. A computer-readable storage medium, wherein the computer-readable storage medium stores a computer program or instructions, and when the computer program or the instructions are run on a computer, the method according to any one of claims 1 to 14 is performed.

34. A computer program product, comprising instructions, wherein when the instructions are run on a computer, the method according to any one of claims 1 to 14 is performed.
